Europäisches Patentamt

European Patent Office

Office européen des brevets

(11) Publication number: **0 411 309 A1**

# EUROPEAN PATENT APPLICATION

(21) Application number: 90112094.9

(22) Date of filing: 26.06.90

(51) Int. Cl.⁵: **G01S 7/20, G01S 13/93, G08G 5/04**

(30) Priority: 30.06.89 US 374378

(43) Date of publication of application:
06.02.91 Bulletin 91/06

(84) Designated Contracting States:
**DE DK FR GB NL SE**

(71) Applicant: **HONEYWELL INC.**
**Honeywell Plaza**
**Minneapolis MN 55408(US)**

(72) Inventor: **Huff, Jerry W.**
**2727 W. Michelle Drie**
**Phoenix, AZ 85023(US)**
Inventor: **Yeh, Yei-Yu**
**13392 N. 102nd Place**
**Scottsdale, AZ 85260(US)**
Inventor: **Silverstein, Louis D.**
**9795 E. Pershing Avenue**
**Schottsdale, AZ 85260(US)**

(74) Representative: **Rentzsch, Heinz et al**
**Honeywell Europe S.A. Holding KG Patent-**
**und Lizenzabteilung Postfach 10 08 65**
**D-6050 Offenbach am Main(DE)**

(54) **Three-dimensional perspective plan-view format for situation awareness displays.**

(57) A three-dimensional perspective plan-view image format (20) for a traffic situation awareness display for a craft, has the craft represented by a center symbol (28) that indicates by its shape the horizontal heading of the craft, has traffic represented by position symbols (34) with lines (30) indicating altitude differentials having traffic end symbols (35, 36, 37) that indicate by various properties (i.e., shape, color or fill pattern) the directions of altitude changes of the traffic, has rings (38) concentric to and individually equidistant from the center symbol (28) for indicating the ranges of the traffic from the craft, has azimuth lines (24) emanating like spokes out from the center symbol (28) for determining azimuths of the traffic relative to the craft, and has various properties in the symbols (35, 36, 37) to indicate status and other information about the traffic. The center symbol (28), position symbols (34), range rings (38) and azimuth lines (24), except the altitude differential lines (30) with associated traffic end symbols (35, 36, 37), are within one reference plane (26), representing the altitude of the craft, that is tilted in the display towards the viewer for providing a three-dimensional perspective.

RED SYMBOLS = RESOLUTION ALERT
AMBER SYMBOLS = TRAFFIC ALERT
CYAN SYMBOLS = PROXIMATE TRAFFIC

*Fig.2*

# THREE-DIMENSIONAL PERSPECTIVE PLAN-VIEW FORMAT FOR SITUATION AWARENESS DISPLAYS

The present invention pertains to air traffic displays and particularly to display formats for an air traffic alert and collision avoidance system (TCAS).

The function of the TCAS display is to present air traffic information, declare threats, and provide advisories on potential air traffic conflicts before the closest point of approach. The TCAS display of the related art uses two-dimensional graphics to convey traffic information in the own aircraft's own protected volume of airspace. However, since two-dimensional graphics can only depict information on two (X- and Y- axes) of the three dimensions required to completely represent spatial traffic relationships for TCAS (X-, Y-, and Z-axes), numerics are used to portray relative altitude on the Z-axis. This two-dimensional plan view display of the TCAS traffic information (supplemented with numeric data tags for the third dimension, altitude) does not provide a direct visual display of the dynamic spatial relationships existing between air traffic in the natural three-dimensional airspace. Interpretation of such a display requires considerable time and mental effort, in that it requires pilots to mentally construct a three-dimensional image of the traffic situation by combining graphically displayed azimuth and range information with numerically presented altitude information.

The related art TCAS display, therefore, is limited to function as an aid to direct visual acquisition of target aircraft, rather than as a correct, veridical, and easily interpretable complete "picture" of the current traffic situation. Pilots simply use the presented information as a cue for visual search to locate potential threats by direct visualization of aircraft outside the cockpit. Furthermore, since the traffic information is dynamic and continuously updated, direct visualization will require pilots to continuously alternate their attention from reading the numerics on the head-down TCAS display to the head-up search up for aircraft outside the cockpit. Thus, using the related art TCAS display, pilots often find it time-consuming and confusing to visually acquire and process dynamic changes in the air traffic situation under moderate or high cockpit workload situations.

Attempts of the related art to solve the problems of indirect visualization of conventional displays have focussed on basic symbology refinement for the two-dimensional TCAS display format. Efforts have been made to reduce confusion and misinterpretation by modifying the symbols. For example, all the numeric codes were initially displayed above the aircraft symbol with a " + " or "-" sign to indicate relative elevation. The most current baseline TCAS display presents the numerics either above or below the symbol for conceptual compatibility. No known effort has been made to explore other innovative approaches or to empirically validate current design concepts. However, research on display formats for other applications reveals potential benefits of an innovative three-dimensional perspective format. Ground-based perspective traffic display formats have been studied in the related art to demonstrate the advantages of utilizing perspective graphics for portraying complex spatial situations. Additionally, perspective displays for naval battlefield management systems have been previously studied to examine the feasibility and advantages of three-dimensional graphic presentations. Such studies have shown significant advantages of three-dimensional formats over two-dimensional formats.

The invention aims for TCAS display formats having three-dimensional perspective color graphics and achieves these objects by the apparatus as characterized in the independent claims. Preferred details are described in the dependent claims.

The present invention relates to formats for the display of data in an airborne environment to assist the pilot in being more cognizant of the conditions in his or her airspace, thereby enhancing his or her situational awareness. This format is specifically designed for the Traffic-Alert and Collision Avoidance System (TCAS), in which air traffic information in a protected three-dimensional volume of airspace surrounding an aircraft is presented with respect to that aircraft. The present invention implements three-dimensional perspective graphics in color to display easily and directly interpretable dynamic spatial relationships for the TCAS system. This format is equally applicable to military situation awareness formats where the pilot needs to quickly and accurately recognize what traffic and targets are in the surrounding airspace.

The invention uses three-dimensional perspective graphics rather than a two-dimensional format supplemented with numeric data tags. The advantages of the present invention are: the realistic and intuitive portrayal of traffic information in three-dimensional perspective that results in the correct perception of the three-dimensional airspace; appropriate use of color, shape and size coding that is compatible with the pilots' expectations; and the integration of displayed situational information to facilitate rapid interpretation by pilots. The primary objectives of this new display format are: to enhance the speed and accuracy of pilot's understanding of the egocentric traffic situation; to minimize complex cognitive processing and pilot mental workload; and to allow pilots to preview and plan evasive maneuvers earlier and more effectively in order to avoid potential air traffic conflicts. Therefore, the function of the TCAS display is greatly extended and is no longer limited to cueing for visual acquisition of traffic outside the aircraft.

Brief Description of the Drawings

Figure 1 shows the previously developed two-dimensional TCAS display format of the related art.
Figure 2 shows the preferred embodiment of the present invention which is a three-dimensional perspective plan-view format for TCAS.

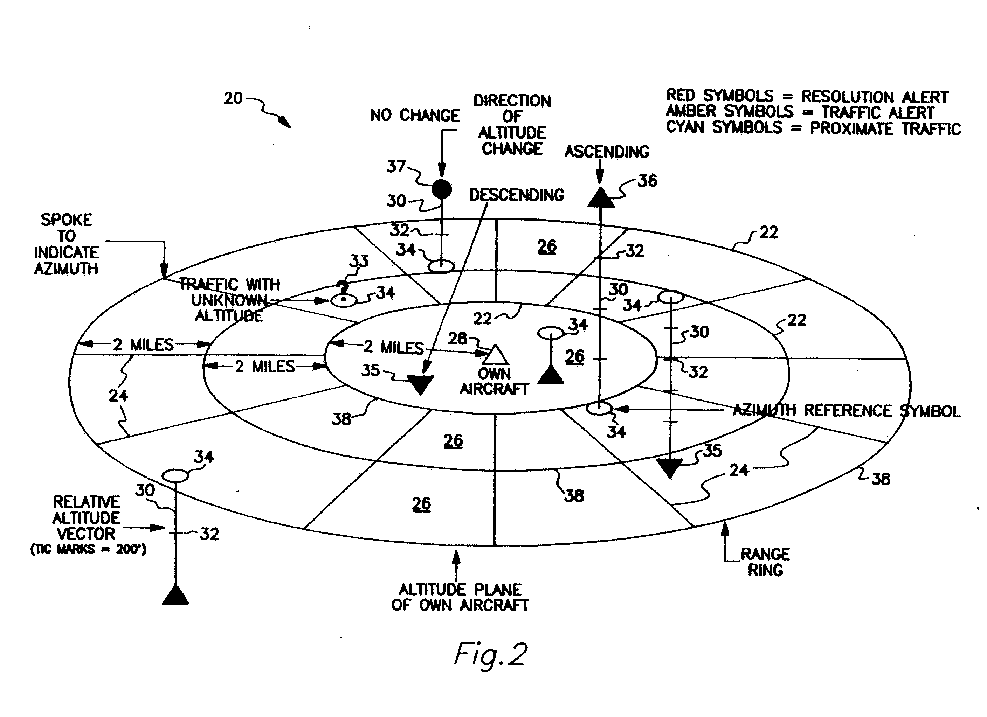

The present invention solves (or greatly minimizes) the problem of TCAS information portrayal by employing a three-dimensional perspective display format 20 in figure 2 that emulates the spatial configuration of air traffic in a natural, egocentric three-dimensional airspace. Format 20 presents a realistic view of the outside world from the pilot's point of view with appropriate depth cues to achieve the desired three-dimensional perspective. Perspective format 20 has the advantage of direct mapping of the three-dimensional air traffic information to the display in such a way that all of the necessary perceptual cues are integrated into a single pictorial format. Format 20 enables pilots to quickly interpret the overall traffic situation surrounding their own aircraft without going through complex cognitive processing.

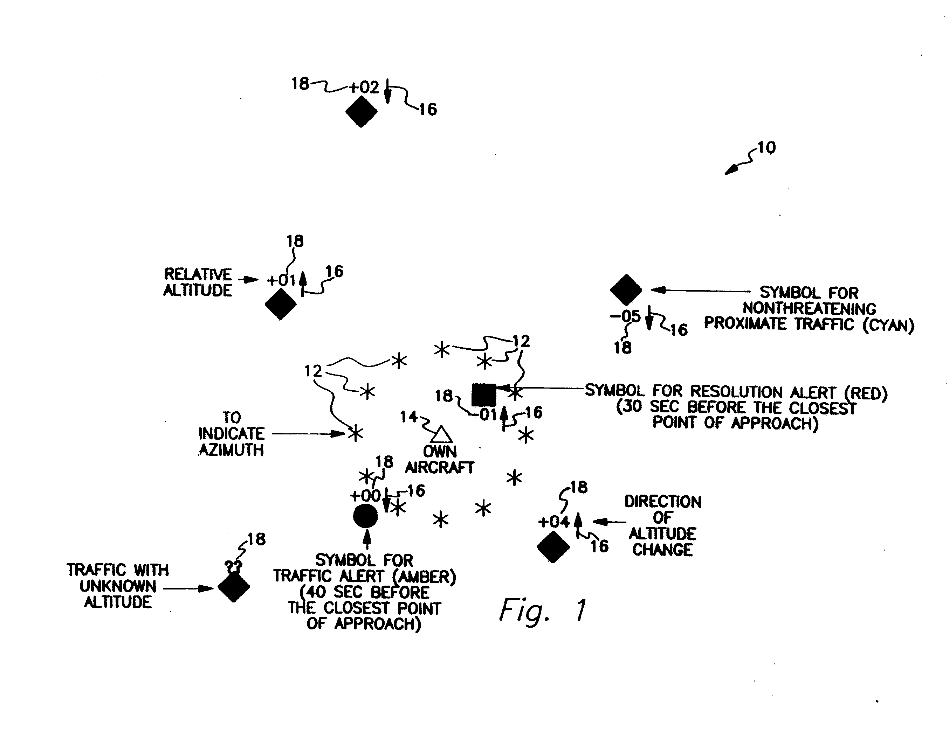

Any number of methods may be employed to map three-dimensional air traffic positions to a two-dimensional plan view. The use of two-dimensional graphics, supplemented with an abstract code for the third dimension (e.g., numerical data tags for altitude coding), is one method. This method of information portrayal serves as foundation for existing TCAS displays. Figure 1 illustrates TCAS display format 10 developed in the related art which has served as the basic information display for existing TCAS systems. As can be seen from figure 1, graphical features are used to convey information about other aircraft in azimuth, range, direction of altitude change, and traffic alert status (based upon time before the closest point of approach). A ring of 12 asterisks 12 is positioned at a range of two nautical miles to provide information on azimuth and range in reference to own aircraft 14 position. Upward and downward arrows 16 are employed to depict the direction of altitude change of displayed air traffic. Redundant color and shape coding are implemented to indicate the status of other aircraft in terms of time before the closest point of approach.

The most notable deficiency in the related art display format 10 is the use of numeric codes 18 to convey relative altitude. In order to determine the relative three-dimensional positions of displayed air traffic, a pilot cannot use simple pictorial cues but must take the time to read the numerical altitude data tags 18 associated with each traffic symbol and mentally integrate these data with the graphically presented azimuth and range information. This reading time can delay the pilot's decision about the position of an aircraft that poses an immediate threat. Such delays can become critical under high pilot workload situations such as flying in turbulence. The use of numerics 18 becomes increasingly cumbersome for interpreting the egocentric air traffic situation as the number of aircraft within the protected airspace increases.

Figure 2 depicts embodiment 20 of the present invention which is a three-dimensional perspective TCAS format having a 21 degree viewing perspective elevation angle from a horizontal reference of the viewing plane. As can be seen from figure 2, range rings 22 with 12 azimuth reference spokes 24, each indicating an azimuth of 30 degrees, are in plane 26 parallel to the earth's surface, at the same altitude where the egocentric reference aircraft 28 is situated.

The altitude, relative to reference aircraft 28, of displayed air traffic is conveyed by vertical vectors 30, with reference tick marks 32, extending above or below the altitude of plane 26 indicating altitudes of air traffic above or below plane 26, respectively. The distance between adjacent tick marks on a vector is 200 feet. The origin of each vector 30 on constant altitude plane 26 is highlighted by symbol 34, which is a circle presented at a 21 degree perspective, in plane 26, to emphasize the azimuthal location of the air traffic. The position of circle 34 also indicates the range in constant altitude plane 26 from own reference aircraft 28. Range rings 38 are in plane 26 and aid in determining distances of traffic entities designated by circles 34. Each ring 38 represents a distance increment of two miles, or other distance that may be set within the discretion of the pilot. At the other end of each vector 30 is a symbol 35, 36 or 37 which indicates the direction of altitude change. Triangle 36 pointing up means that the traffic entity is ascending in altitude, and triangle 35 pointing down indicates that the traffic entity is descending in altitude. Solid circle 37 indicates that the traffic entity is maintaining a constant altitude. Circle 34 with question mark 33 indicates that the altitude of the traffic entity is unknown. The color of symbols 35, 36 or 37 indicate the time before the closest point of approach (CPA). Traffic symbols 35, 36 or 37, when red, indicate a short time (i.e., 30 seconds) before the CPA, which is a resolution alert. Traffic symbols 35, 36 or 37, when amber, indicate a longer time (i.e., 40 seconds) before the CPA, which is a traffic alert. When traffic symbols 35, 36 or 37 indicate proximate traffic which pose no immediate threat, they are color-coded cyan.

Color coding may also be incorporated in symbols 35, 36 or 37 to indicate the status of other types of aircraft. Range, radar lock on (military), closing rate, or time to impact can be conveyed with appropriate color selection to indicate the level of threat. Of course, various other symbol shapes can be used to indicate such parameters as type of aircraft, aircraft motion (in addition to altitude), and priority of threat.

With this type of pictorial perspective display 20, pilots can directly interpret the three-dimensional dynamic traffic situation from a quick glance, eliminating or minimizing the need for direct visualization of aircraft outside the cockpit. They can also utilize this format to accomplish the advanced planning of evasive maneuvers without going through complex and difficult cognitive processing. Consequently, pilots may rely on advanced perspective TCAS format 20 as a traffic display when direct visual contact is limited by bad weather and flight by instruments is necessary.

Advanced perspective TCAS display format 20 can be implemented as a stand-alone TCAS display or incorporated within other electronic avionics displays such as a vertical speed indicator, electronic attitude director indicator (EADI), electronic horizontal situation indicator (EHSI), or weather radar display. Variations in symbology such as color and shape coding can also be easily implemented. Further, three-dimensional predictive flight path guidance to indicate a suggested avoidance path in the three-dimensional airspace can be easily incorporated within perspective TCAS display format 20. As the aviation industry extends the resolution advisory function of TCAS to include both vertical and horizontal maneuvers, three-dimensional perspective format 20 having predictive guidance will allow pilots to comprehend the dynamic traffic situation quickly and to verify suggested maneuvers easily. The range rings 38 in their perspective view are represented on the display at ellipses having their main axis extending rectangular with respect to said vertical lines 30.

## Claims

1. A traffic information apparatus display, **characterized by:**

a) a perspective image format (20), situated in an own craft, for presenting three-dimensional information concerning traffic in a spatial volume about said own craft;

b) a reference symbol (28) representing said own craft;

c) a plurality of range rings (38) concentric to said reference symbol (28) and in a plane (26) containing said reference symbol (28);

d) at least one traffic symbol (34) referenced to said plane (26) representing a traffic entity; with said traffic symbol having

d1) a vertical line (30) perpendicular to said plane (26), extending from said plane (26) in a direction representing an altitude difference between said traffic entity and said own craft, and

d2) having an information symbol (35, 36, 37) situated at an end of said vertical line (30) indicating constant, ascending or descending altitude of said traffic entity, according to properties of said information symbol (35, 36, 37); and

e) a plurality of azimuth lines (24) in said plane (26), emanating outward in directions from said reference symbol (28), wherein each said azimuth line (24) represents an azimuth relative to said own craft.

2. The apparatus system of claim 1, **characterized in that:**

a) the first reference symbol (28) representing said own craft, has a shape which indicates horizontal heading or track of said own craft and may have a variable shape or other coding feature which determines whether the own craft is maintaining an altitude that is constant, increasing or decreasing;

b) each of said plurality of range rings (38) represents a specified increment of distance from said own craft;

c) said plane (26) is approximately parallel to earth's surface, represents an altitude of said own craft, and is at a viewing angle perspective between zero and ninety degrees in the direction of and relative to a horizontal reference which is approximately parallel to a heading of said own craft and to the surface of the earth;

d) the at least one traffic symbol comprises:

d1) a second reference symbol (34) in said plane representing a horizontal distance of said traffic entity from said own craft;

d2) said vertical line (30) perpendicular to said plane (26), extending from said second reference symbol (34) in a direction representing an altitude difference between said traffic entity and said own craft, wherein said vertical line (30) has tick marks (32) indicating specified increments of altitude difference; and

d3) said information symbol (35, 36, 37), having properties of variable shape, variable color, and variable fill pattern, situated at an end of said vertical line, indicating constant, ascending or descending altitude of said traffic entity, according to the properties of said information symbol (35, 36, 37), and indicating alert status of said traffic entity relative to said own craft according to the properties of said information symbol (35, 36, 37).

3. The apparatus of claim 1, **characterized in that:**

a) said first reference symbol (28) has the shape of a triangle having a vertex pointing in a direction parallel to said plane (26) and in a direction of heading of said own craft;

b) at least one of said information symbols has the shape of a solid triangle (35, 36) having a vertex pointing in a direction parallel to said vertical line and in a direction of altitude change of said traffic entity; or has the shape (37) of a solid circle when the altitude of said traffic entity is constant;

c) said information symbol (35, 36, 37) has a color of red if designating a resolution alert, has a color amber if designating a traffic alert and has a color cyan if designating proximate traffic; and

d) said traffic symbol has a question mark (33) if said traffic entity has unknown altitude.

4. The apparatus of claim 3, **characterized in that:**

a) the resolution alert indicates that said traffic entity is within 30 seconds of a closest point of approach to said own craft; and

b) the traffic alert indicates that said traffic entity is within 40 seconds of a closest point of approach to said own craft.

5. A three-dimensional perspective plan-view image format (20) for a traffic information system two-dimensional display, **characterized by:**

a) first symbolizing means (28) for representing an egocentric reference craft;

b) second symbolizing means (26), situated so as to form a plane with said first symbolizing means (28) and wherein the plane represents an altitude of the reference craft, is approximately parallel to earth's surface, and appears tilted in the display toward a viewer, for representing traffic peripheral to the reference craft and for representing altitude differential and direction of changing altitude differential between the traffic and the reference craft;

c) third symbolizing means (38), situated in the plane, for representing distances of the traffic from the reference craft; and

d) fourth symbolizing means (24), situated in the plane, for representing azimuth of the traffic relative to the reference craft.

6. The apparatus of claim 5, **characterized in that:**

a) said first symbolizing means (28) indicates heading of the reference craft relative to earth's surface;

b) said second symbolizing means (26) has variable shape means (35, 36, 37) for indicating the direction of changing altitude differential, first line means (30), perpendicular to the plane, for indicating the altitude differential, and variable color means for indicating status of the traffic;

c) said third symbolizing means (38) has a range circle means, situated in the plane, for indicating distance of the traffic from the reference craft; and

d) said fourth symbolizing means (24) has a line means, situated in the plane and emanating from said first means, for indicating specific azimuths of the traffic relative to the reference craft.

7. The apparatus of claim 5 or 6, **characterized in that:**

a) said third symbolizing means comprises at least one range ring (38) concentric to and equidistant from said first symbol (28), wherein said at least one range ring (38) and said first symbol (28) form an invisible plane parallel (26) to earth's surface representing an altitude of said reference craft;

b) said fourth symbolizing means includes a plurality of reference spokes (24) situated in the plane (26), having a common connection at said first symbol (28); and

c) at least one further symbol (35, 36, 37) representing an entity referenced to the plane (26) has a variable property (i.e., shape, color or fill pattern) that indicates a changing in altitude of the entity and having a line (30) that indicates an altitude differential of the entity relative to the plane (26).

8. The apparatus of claim 7, **characterized in that:**

a) said first symbol (28) indicates horizontal heading of the reference craft;

b) said further symbol (35, 36, 37) having a variable color, shape or fill pattern indicates an alert status of the entity;

c) the line (30) of said further symbol (35, 36, 37) has reference tick marks (32) indicating increments of altitude; and

d) the plane (26) is tilted towards the viewer of the situation awareness display (20), so as to provide the three-dimensional perspective of said first symbol (28), further symbol (35, 36, 37), concentric ring (38) and reference spokes (24) to the viewer.

9. The apparatus of one of the preceding claims, **characterized in that** the range rings (38) in their perspective view are represented on the display at ellipses having their main axis extending rectangular with respect to said vertical lines (30).

SYMBOL FOR NONTHREATENING PROXIMATE TRAFFIC (CYAN)

SYMBOL FOR RESOLUTION ALERT (RED) (30 SEC BEFORE THE CLOSEST POINT OF APPROACH)

DIRECTION OF ALTITUDE CHANGE

RELATIVE ALTITUDE

TO INDICATE AZIMUTH

OWN AIRCRAFT

SYMBOL FOR TRAFFIC ALERT (AMBER) (40 SEC BEFORE THE CLOSEST POINT OF APPROACH)

TRAFFIC WITH UNKNOWN ALTITUDE

*Fig. 1*

RED SYMBOLS = RESOLUTION ALERT
AMBER SYMBOLS = TRAFFIC ALERT
CYAN SYMBOLS = PROXIMATE TRAFFIC

DIRECTION OF ALTITUDE CHANGE

NO CHANGE

ASCENDING

DESCENDING

SPOKE TO INDICATE AZIMUTH

TRAFFIC WITH UNKNOWN ALTITUDE

2 MILES

2 MILES

2 MILES

OWN AIRCRAFT

AZIMUTH REFERENCE SYMBOL

RELATIVE ALTITUDE VECTOR
(TIC MARKS = 200')

ALTITUDE PLANE OF OWN AIRCRAFT

RANGE RING

Fig.2

EP 0 411 309 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-2 111 937 (PLESSEY) * page 1, line 20 - page 4, line 1; page 7, lines 6-15; page 12, lines 1-13; claims 1-6; figure 3 * | 1,2,5 | G 01 S 7/20 G 01 S 13/93 G 08 G 5/04 |
| A | | 6,8,9 | |
| A | US-A-3 300 778 (VICKERS) * column 1, lines 7-11,31-44; column 1, line 53 - column 2, line 18; column 2, line 40 - column 3, line 60; claims 1-3; figure 1 * | 1,2,5-7 | |
| A | GB-A-1 076 574 (ELECTRIC & MUSICAL INDUSTRIES) * page 1, line 40 - page 2, line 2; page 2, lines 38-93; figure 1 * | 1,2,5-7 | |
| A | DE-A-3 210 694 (SIEMENS) * page 5, line 8 - page 6, line 13; page 10, line 31 - page 12, line 13; figures 5-8 * | 1,2,5,7 | |
| A | GB-A-2 151 425 (MARCONI AVIONICS) * abstract; figure 1 * | 1,5 | TECHNICAL FIELDS SEARCHED (Int. Cl.5) G 01 S 7/00 G 01 S 13/00 G 08 G 5/00 |

The present search report has been drawn up for all claims

| Place of search | Date of completion of the search | Examiner |
|---|---|---|
| BERLIN | 23-10-1990 | BEITNER M.J.J.B. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)